# EUROPEAN PATENT SPECIFICATION

(11) **EP 4 108 458 B1**
(45) Date of publication and mention of the grant of the patent: **07.10.2026**
(21) Application number: 22177958.0
(22) Date of filing: 08.06.2022
(51) Int. Cl.: B33Y 80/00, F28F 7/02, F28D 7/00, F28D 9/00

(54) **WAVY ADJACENT PASSAGE HEAT EXCHANGER CORE**
WELLENFÖRMIGER WÄRMETAUSCHERKERN MIT ANGRENZENDEM DURCHGANG
ÂME ONDULÉE D'ÉCHANGEUR DE CHALEUR DE PASSAGE ADJACENT

(30) Priority: 23.06.2021 US 202117355789
(43) Date of publication of application: 28.12.2022
(73) Proprietor: Hamilton Sundstrand Corporation, Charlotte, NC 28217-4578 (US)
(72) Inventor: STRANGE, Jeremy M., Windsor, 06095 (US); RUIZ, Gabriel, Broad Brook, CT 06016 (US); ZAFFETTI, Mark A., Suffield, CT 06078 (US)
(74) Representative: Dehns

(56) References cited:
- EP-B1- 3 193 125
- US-A1- 2017 089 643
- US-A1- 2019 033 013
- US-A1- 2020 166 293
- US-A1- 2020 309 459
- US-B2- 10 809 007

## Description

### BACKGROUND

Exemplary embodiments pertain to the art of heat exchangers, and more particularly to flow passage configurations of heat exchangers.

Heat exchangers are a technology used throughout the aerospace industry as well as in other industries. These devices are utilized to transfer thermal energy from a relatively hot fluid flow to a relatively cold fluid flow and perform numerous essential functions, for example, cooling vehicle electronics and other systems or conditioning an environment to keep astronauts comfortable in space.

One typical heat exchanger configuration is a plate-fin heat exchanger, in which components are stacked and brazed to form a completed heat exchanger. Depending on complexity of the construction, such heat exchangers may have hundreds of components which are assembled into the completed heat exchanger. Such assembly can be costly and cumbersome, and the assembly introduces limitations to the configuration of the heat exchanger, such as passage shape and orientation. The art would appreciate improvements to more efficiently manufacture heat exchangers and provide greater efficiency in thermal energy transfer in heat exchangers. EP 3 193 125 discloses a core section of a heat exchanger with a plurality of first fluid passages for a first fluid ; a plurality of second fluid passages for a second fluid to exchange thermal energy with the first fluid; wherein the plurality of first fluid passages and the plurality of second fluid passages extend non-linearly along a length of the first fluid passages and the second fluid passages between a first core end and a second core end opposite the first core end.

### BRIEF DESCRIPTION

A core section of a heat exchanger according to the invention is defined in claim1.

Additionally or alternatively, in this or other embodiments the plurality of first fluid passages and the plurality of second fluid passages extend sinusoidally between the first core end and the second core end

Additionally or alternatively, in this or other embodiments the plurality of first fluid passages are each separated from the plurality of second fluid passages by a passage wall through which the thermal energy is exchanged.

Additionally or alternatively, in this or other embodiments the first fluid flows through the core section in a first direction and the second fluid flows through the core section in a second direction opposite the first direction.

Additionally or alternatively, in this or other embodiments each second fluid passage of the plurality of second fluid passages is located between a first fluid passage of the plurality of first fluid passages and a third fluid passage of the plurality of third fluid passages.

Additionally or alternatively, in this or other embodiments the plurality of first fluid passages, the plurality of second fluid passages and the plurality of third fluid passages extend parallelly between the first core end and the second core end.

In another embodiment, a heat exchanger includes the features of claim 6.

Additionally or alternatively, in this or other embodiments the plurality of first fluid passages and the plurality of second fluid passages extend sinusoidally between the first core end and the second core end

Additionally or alternatively, in this or other embodiments the plurality of first fluid passages are each separated from the plurality of second fluid passages by a passage wall through which the thermal energy is exchanged.

Additionally or alternatively, in this or other embodiments the first fluid flows through the core section in a first direction and the second fluid flows through the core section in a second direction opposite the first direction.

Additionally or alternatively, in this or other embodiments each second fluid passage of the plurality of second fluid passages is located between a first fluid passage of the plurality of first fluid passages and a third fluid passage of the plurality of third fluid passages.

Additionally or alternatively, in this or other embodiments the plurality of first fluid passages, the plurality of second fluid passages and the plurality of third fluid passages extend parallelly between the first core end and the second core end.

In yet another embodiment, a method of forming a core section of a heat exchanger is defined in claim 11.

Additionally or alternatively, in this or other embodiments the non-linear path is sinusoidal.

Additionally or alternatively, in this or other embodiments the core section is formed by one or more additive manufacturing processes.

### BRIEF DESCRIPTION OF THE DRAWINGS

The following descriptions should not be considered limiting in any way. With reference to the accompanying drawings, like elements are numbered alike:
FIG. 1 is a schematic view of an embodiment of a heat exchanger
FIG. 2 is a schematic illustration of an embodiment of a core section of a heat exchanger; and
FIG. 3 is an illustration of a method of forming a heat exchanger core.

### DETAILED DESCRIPTION

A detailed description of one or more embodiments of the disclosed apparatus and method are presented herein by way of exemplification and not limitation with reference to the Figures.

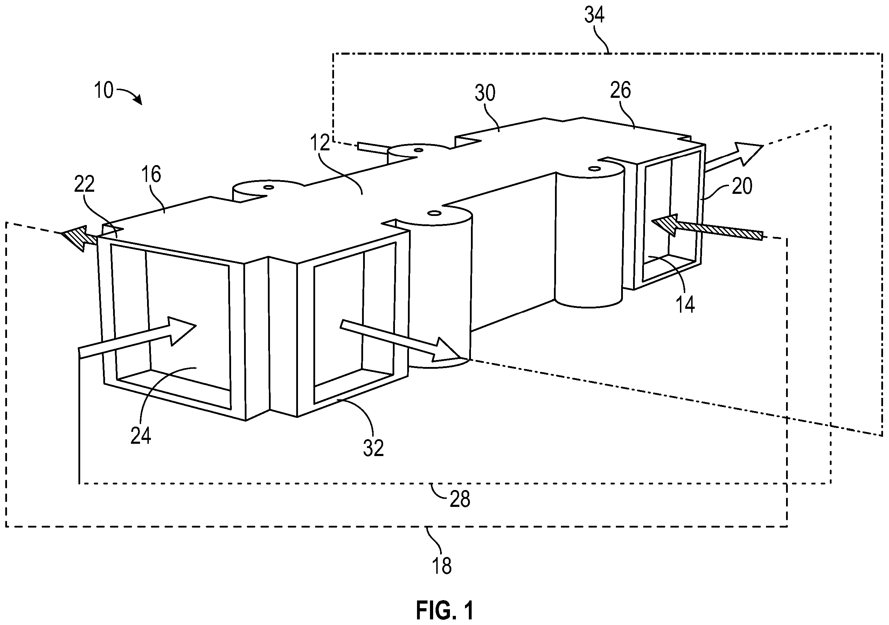

Referring now to FIG. 1, illustrated is a schematic view of an embodiment of a heat exchanger 10. In the embodiment illustrated, the heat exchanger 10 is a three fluid-loop heat exchanger 10, meaning three separate fluid flows are circulated therethrough and exchange thermal energy in a core 12 of the heat exchanger 10. The heat exchanger 10 includes a first loop inlet 14 and a first loop outlet 16 for a first fluid loop 18. In some embodiments, the first loop inlet 14 is located at a first heat exchanger end 20 of the heat exchanger 10 and the first loop outlet 16 is located at a second heat exchanger end 22 opposite the first heat exchanger end 20. The heat exchanger 10 further includes a second loop inlet 24 and a second loop outlet 26 of a second fluid loop 28, and a third loop inlet 30 and a third loop outlet 32 of a third fluid loop 34. Each of the first fluid loop 18, the second fluid loop 28 and the third fluid loop 34 have a respective first fluid, second fluid and third fluid circulating therethrough. In some embodiments, the first fluid, the second fluid and the third fluid are all different fluids, while in other embodiments two or more of the first fluid, the second fluid and the third fluid may be the same fluid. While three fluid loops are illustrated and described herein with heat exchanger 10, one skilled in the art will readily appreciate that a three-loop configuration is merely exemplary, and that the present disclosure may be readily applied to heat exchanger 10 configurations accommodating two, four or more fluid loops.

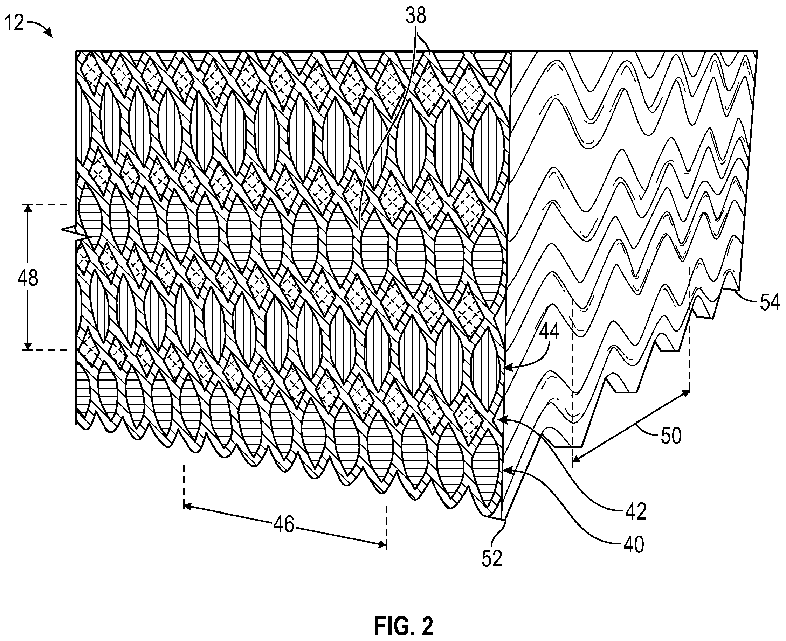

Referring now to FIG. 2, illustrated is a cross-sectional view of a core 12 of the heat exchanger 10. The core 12 is the portion of the heat exchanger where the thermal energy transfer occurs, after the fluids enter the heat exchanger through their respective fluid loop inlets. The core 12 includes a plurality of passages separated by passage walls 38. The plurality of passages includes a plurality of first fluid passages 40, a plurality of second fluid passages 42 and a plurality of third fluid passages 44. In some embodiments, the first fluid passages 40, second fluid passages 42 and the third fluid passages 44 are arranged in rows that extend, for example, in a first direction 46, such as across a width of the core 12. The rows are stacked or arranged along a second direction 48, such as a height of the core 12. In some embodiments, such as shown, the fluid passages are polygonal, such as rhombus-shaped to increase the amount of surface contact between adjacent fluid passages and between adjacent rows of fluid passages. In some embodiments, each of the first fluid passages 40 and the third fluid passages 44 contain a relatively cold first fluid and third fluid, respectively, while the second fluid passages 42 contain a relatively hot second fluid. The rows of fluid passages are arranged or stacked such that each row of second fluid passages 42 is located between a row of first fluid passages 40 and a row of third fluid passages 44. One skilled in the art, however, will readily appreciate that other arrangements of rows may be utilized.

The first fluid passages 40, the second fluid passages 42 and the third fluid passages 44 all extend along a third direction 50, such as a length of the core 12. The fluid passages 40, 42, 44 extend non-linearly along the third direction 50 between a first core end 52 and a second core end 54. In some embodiments, the fluid passages 40, 42, 44 extend along a sinusoidal path or other tortuous path generally along the third direction between the first core end 52 and the second core end 54. Further, in some embodiments, the fluid passages 40, 42, 44 extend parallelly along the sinusoidal or tortuous path. The use of the sinusoidal or tortuous path increases the primary heat exchange surface area along a given length of the core 12 and increases turbulence in the flow of the first fluid, second fluid and third fluid thereby improving the efficiency of the thermal energy exchange.

In some embodiments, the heat exchanger 10 is a counterflow heat exchanger in which one or more of the first fluid, second fluid or third fluid flows through the core 12 in a first direction from the first core end 52 to the second core end 54 and the other fluids flow in a second direction opposite the first direction. In other embodiments, however, the heat exchanger 10 is a parallel flow heat exchanger in which all of the first fluid, the second fluid and the third fluid flow through the core 12 in the same direction.

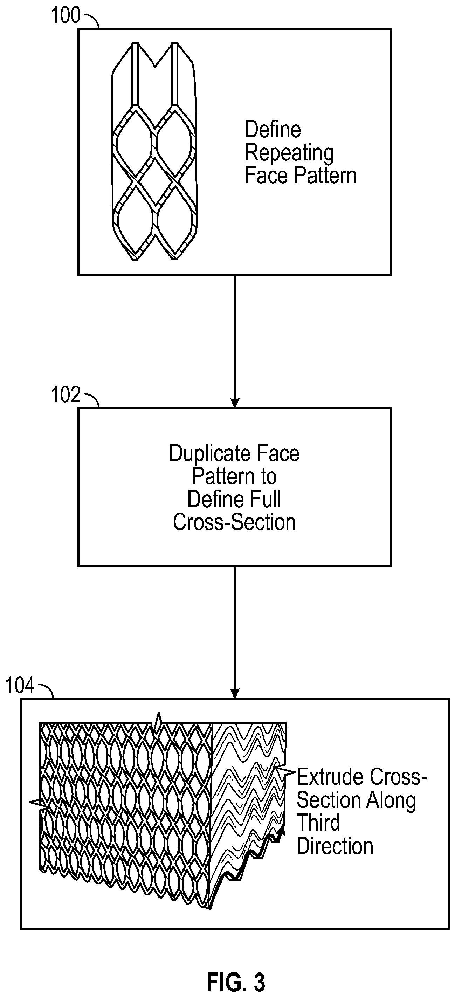

Referring now to FIG. 3, to form the core 12, a repeating face pattern of the core 12 is defined at step 100. The pattern defines the arrangements and relative sizes and cross-sectional shapes of the fluid passages 40, 42, 44 by defining the passage walls 38. The face pattern configuration is an all-primary surface area configuration and may be customized to provide different cross-sectional shapes of the fluid passages 40, 42, 44 to accommodate different hot and cold side flow. The face pattern 56 is duplicated as needed to define a full cross-sectional shape of the core 12 at step 102. At step 104, the cross-sectional shape of the core 12 is extruded generally along the third direction 50, and specifically along the desired sine wave path or other tortuous path direction to fully define the core 12. In some embodiments, the core 12 is formed by one or more additive manufacturing processes.

While the present disclosure has been described with reference to an exemplary embodiment or embodiments, it will be understood by those skilled in the art that various changes may be made without departing from the scope of the present disclosure, which is defined in the appended claims. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A core section (12) of a heat exchanger, comprising:
a plurality of first fluid passages (40) through which a first fluid is flowed;
a plurality of second fluid passages (42) through which a second fluid is flowed to exchange thermal energy with the first fluid;
a plurality of third fluid passages (44) through which a third fluid is flowed to exchange thermal energy with the second fluid; and
wherein the plurality of first fluid passages (40), the plurality of second fluid passages (42), and the plurality of third fluid passages (44) extend non-linearly along a length of the first fluid passages (40), the second fluid passages (42), and the third fluid passages (44) between a first core end (52) and a second core end (54) opposite the first core end.

2. The core section of claim 1, wherein the plurality of first fluid passages (40) and the plurality of second fluid passages (42) extend sinusoidally between the first core end and the second core end

3. The core section of claim 1 or 2, wherein the plurality of first fluid passages (40) are each separated from the plurality of second fluid passages (42) by a passage wall through which the thermal energy is exchanged.

4. The core section of any preceding claim, wherein the first fluid flows through the core section (12) in a first direction and the second fluid flows through the core section in a second direction opposite the first direction.

5. The core section of claim 1, wherein each second fluid passage of the plurality of second fluid passages (42) is located between a first fluid passage of the plurality of first fluid passages (40) and a third fluid passage of the plurality of third fluid passages (44); and/or
wherein the plurality of first fluid passages (40), the plurality of second fluid passages (42) and the plurality of third fluid passages (44) extend parallelly between the first core end (52) and the second core end (54).

6. A heat exchanger (10), comprising:
a first fluid inlet;
a first fluid outlet;
a second fluid inlet;
a second fluid outlet; and
a core section (12), as claimed in claim 1, wherein the first fluid is flowed from the first fluid inlet to the first fluid outlet;
wherein the second fluid is flowed from the second fluid inlet to the second fluid outlet.

7. The heat exchanger of claim 6, wherein the plurality of first fluid passages (40) and the plurality of second fluid passages (42) extend sinusoidally between the first core end (52) and the second core end (54).

8. The heat exchanger of claim 6 or 7, wherein the plurality of first fluid passages (40) are each separated from the plurality of second fluid passages (42) by a passage wall through which the thermal energy is exchanged.

9. The heat exchanger of any of claims 6-8, wherein the first fluid flows through the core section (12) in a first direction and the second fluid flows through the core section in a second direction opposite the first direction.

10. The heat exchanger of claim 6, wherein each second fluid passage of the plurality of second fluid passages (42) is located between a first fluid passage of the plurality of first fluid passages (40) and a third fluid passage of the plurality of third fluid passages (44); and/or
wherein the plurality of first fluid passages (40), the plurality of second fluid passages (42) and the plurality of third fluid passages (44) extend parallelly between the first core end (52) and the second core end (54).

11. A method of forming a core section of a heat exchanger, comprising:
defining a repeating cross-sectional portion of the core section, including a plurality of first fluid passages for conveyance of a first fluid and a plurality of second fluid passages for conveyance of a second fluid and a plurality of third fluid passages for conveyance of a third fluid;
repeating the cross-sectional portion along a first direction and a second direction to define a full cross-section of the core section of the heat exchanger; and
extruding the full cross-section along a non-linear path between a first core section end and a second core section end.

12. The method of claim 11, wherein the non-linear path is sinusoidal.

13. The method of claim 11 or 12, wherein the core section is formed by one or more additive manufacturing processes.

## Patentansprüche

1. Kernabschnitt (12) eines Wärmetauschers, umfassend:
eine Mehrzahl von ersten Fluiddurchgängen (40), durch die ein erstes Fluid geleitet wird;
eine Mehrzahl von zweiten Fluiddurchgängen (42), durch die ein zweites Fluid geleitet wird, um thermische Energie mit dem ersten Fluid auszutauschen;
eine Mehrzahl von dritten Fluiddurchgängen (44), durch die ein drittes Fluid geleitet wird, um thermische Energie mit dem zweiten Fluid auszutauschen; und
wobei sich die Mehrzahl von ersten Fluiddurchgängen (40), die Mehrzahl von zweiten Fluiddurchgängen (42) und die Mehrzahl von dritten Fluiddurchgängen (44) nichtlinear entlang einer Länge der ersten Fluiddurchgänge (40), der zweiten Fluiddurchgänge (42) und der dritten Fluiddurchgänge (44) zwischen einem ersten Kernende (52) und einem zweiten Kernende (54), das dem ersten Kernende gegenüberliegt, erstrecken.

2. Kernabschnitt nach Anspruch 1, wobei sich die Mehrzahl von ersten Fluiddurchgängen (40) und die Mehrzahl von zweiten Fluiddurchgängen (42) sinusförmig zwischen dem ersten Kernende und dem zweiten Kernende erstrecken.

3. Kernabschnitt nach Anspruch 1 oder 2, wobei die Mehrzahl von ersten Fluiddurchgängen (40) jeweils durch eine Durchgangswand, durch die die thermische Energie ausgetauscht wird, von der Mehrzahl von zweiten Fluiddurchgängen (42) getrennt ist.

4. Kernabschnitt nach einem der vorhergehenden Ansprüche, wobei das erste Fluid in einer ersten Richtung durch den Kernabschnitt (12) strömt und das zweite Fluid in einer zweiten Richtung, die der ersten Richtung entgegengesetzt ist, durch den Kernabschnitt strömt.

5. Kernabschnitt nach Anspruch 1, wobei jeder zweite Fluiddurchgang der Mehrzahl von zweiten Fluiddurchgängen (42) zwischen einem ersten Fluiddurchgang der Mehrzahl von ersten Fluiddurchgängen (40) und einem dritten Fluiddurchgang der Mehrzahl von dritten Fluiddurchgängen (44) angeordnet ist; und/oder
wobei sich die Mehrzahl von ersten Fluiddurchgängen (40), die Mehrzahl von zweiten Fluiddurchgängen (42) und die Mehrzahl von dritten Fluiddurchgängen (44) parallel zwischen dem ersten Kernende (52) und dem zweiten Kernende (54) erstrecken.

6. Wärmetauscher (10), umfassend:
einen ersten Fluideinlass;
einen ersten Fluidauslass;
einen zweiten Fluideinlass;
einen zweiten Fluidauslass; und
einen Kernabschnitt (12) nach Anspruch 1, wobei das erste Fluid von dem ersten Fluideinlass zu dem ersten Fluidauslass geleitet wird;
wobei das zweite Fluid von dem zweiten Fluideinlass zu dem zweiten Fluidauslass geleitet wird.

7. Wärmetauscher nach Anspruch 6, wobei sich die Mehrzahl von ersten Fluiddurchgängen (40) und die Mehrzahl von zweiten Fluiddurchgängen (42) sinusförmig zwischen dem ersten Kernende (52) und dem zweiten Kernende (54) erstrecken.

8. Wärmetauscher nach Anspruch 6 oder 7, wobei die Mehrzahl von ersten Fluiddurchgängen (40) jeweils durch eine Durchgangswand, durch die die thermische Energie ausgetauscht wird, von der Mehrzahl von zweiten Fluiddurchgängen (42) getrennt ist.

9. Wärmetauscher nach einem der Ansprüche 6-8, wobei das erste Fluid in einer ersten Richtung durch den Kernabschnitt (12) strömt und das zweite Fluid in einer zweiten Richtung, die der ersten Richtung entgegengesetzt ist, durch den Kernabschnitt strömt.

10. Wärmetauscher nach Anspruch 6, wobei jeder zweite Fluiddurchgang der Mehrzahl von zweiten Fluiddurchgängen (42) zwischen einem ersten Fluiddurchgang der Mehrzahl von ersten Fluiddurchgängen (40) und einem dritten Fluiddurchgang der Mehrzahl von dritten Fluiddurchgängen (44) angeordnet ist; und/oder
wobei sich die Mehrzahl von ersten Fluiddurchgängen (40), die Mehrzahl von zweiten Fluiddurchgängen (42) und die Mehrzahl von dritten Fluiddurchgängen (44) parallel zwischen dem ersten Kernende (52) und dem zweiten Kernende (54) erstrecken.

11. Verfahren zum Bilden eines Kernabschnitts eines Wärmetauschers, umfassend:
Definieren eines sich wiederholenden Querschnittsabschnitts des Kernabschnitts, der eine Mehrzahl von ersten Fluiddurchgängen zum Fördern eines ersten Fluids und eine Mehrzahl von zweiten Fluiddurchgängen zum Fördern eines zweiten Fluids und eine Mehrzahl von dritten Fluiddurchgängen zum Fördern eines dritten Fluids beinhaltet;
Wiederholen des Querschnittsabschnitts entlang einer ersten Richtung und einer zweiten Richtung, um einen vollständigen Querschnitt des Kernabschnitts des Wärmetauschers zu definieren; und
Extrudieren des vollständigen Querschnitts entlang eines nichtlinearen Pfades zwischen einem ersten Kernabschnittsende und einem zweiten Kernabschnittsende.

12. Verfahren nach Anspruch 11, wobei der nichtlineare Pfad sinusförmig ist.

13. Verfahren nach Anspruch 11 oder 12, wobei der Kernabschnitt durch ein oder mehrere additive Fertigungsverfahren gebildet wird.

## Revendications

1. Section de noyau (12) d'un échangeur de chaleur, comprenant :
une pluralité de premiers passages de fluide (40) à travers lesquels un premier fluide s'écoule ;
une pluralité de deuxièmes passages de fluide (42) à travers lesquels un deuxième fluide s'écoule pour échanger de l'énergie thermique avec le premier fluide ;
une pluralité de troisièmes passages de fluide (44) à travers lesquels un troisième fluide s'écoule pour échanger de l'énergie thermique avec le deuxième fluide ; et
dans laquelle la pluralité de premiers passages de fluide (40), la pluralité de deuxièmes passages de fluide (42) et la pluralité de troisièmes passages de fluide (44) s'étendent de manière non linéaire le long d'une longueur des premiers passages de fluide (40), des deuxièmes passages de fluide (42) et des troisièmes passages de fluide (44) entre une première extrémité de noyau (52) et une seconde extrémité de noyau (54) opposée à la première extrémité de noyau.

2. Section de noyau selon la revendication 1, dans laquelle la pluralité de premiers passages de fluide (40) et la pluralité de deuxièmes passages de fluide (42) s'étendent de manière sinusoïdale entre la première extrémité de noyau et la seconde extrémité de noyau

3. Section de noyau selon la revendication 1 ou 2, dans laquelle la pluralité de premiers passages de fluide (40) sont chacun séparés de la pluralité de deuxièmes passages de fluide (42) par une paroi de passage à travers laquelle l'énergie thermique est échangée.

4. Section de noyau selon l'une quelconque revendication précédente, dans laquelle le premier fluide s'écoule à travers la section de noyau (12) dans une première direction et le deuxième fluide s'écoule à travers la section de noyau dans une seconde direction opposée à la première direction.

5. Section de noyau selon la revendication 1, dans laquelle chaque deuxième passage de fluide de la pluralité de deuxièmes passages de fluide (42) est situé entre un premier passage de fluide de la pluralité de premiers passages de fluide (40) et un troisième passage de fluide de la pluralité de troisièmes passages de fluide (44) ; et/ou
dans laquelle la pluralité de premiers passages de fluide (40), la pluralité de deuxièmes passages de fluide (42) et la pluralité de troisièmes passages de fluide (44) s'étendent parallèlement entre la première extrémité de noyau (52) et la seconde extrémité de noyau (54).

6. Échangeur de chaleur (10), comprenant :
une première entrée de fluide ;
une première sortie de fluide ;
une seconde entrée de fluide ;
une seconde sortie de fluide ; et
une section de noyau (12) selon la revendication 1, dans lequel le premier fluide s'écoule à partir de la première entrée de fluide vers la première sortie de fluide ;
dans lequel le deuxième fluide s'écoule à partir de la seconde entrée de fluide vers la seconde sortie de fluide.

7. Échangeur de chaleur selon la revendication 6, dans lequel la pluralité de premiers passages de fluide (40) et la pluralité de deuxièmes passages de fluide (42) s'étendent de manière sinusoïdale entre la première extrémité de noyau (52) et la seconde extrémité de noyau (54).

8. Échangeur de chaleur selon la revendication 6 ou 7, dans lequel la pluralité de premiers passages de fluide (40) sont chacun séparés de la pluralité de deuxièmes passages de fluide (42) par une paroi de passage à travers laquelle l'énergie thermique est échangée.

9. Échangeur de chaleur selon l'une quelconque des revendications 6 à 8, dans lequel le premier fluide s'écoule à travers la section de noyau (12) dans une première direction et le deuxième fluide s'écoule à travers la section de noyau dans une seconde direction opposée à la première direction.

10. Échangeur de chaleur selon la revendication 6, dans lequel chaque deuxième passage de fluide de la pluralité de deuxièmes passages de fluide (42) est situé entre un premier passage de fluide de la pluralité de premiers passages de fluide (40) et un troisième passage de fluide de la pluralité de troisièmes passages de fluide (44) ; et/ou
dans laquelle la pluralité de premiers passages de fluide (40), la pluralité de deuxièmes passages de fluide (42) et la pluralité de troisièmes passages de fluide (44) s'étendent parallèlement entre la première extrémité de noyau (52) et la seconde extrémité de noyau (54).

11. Procédé de formation d'une section de noyau d'un échangeur de chaleur, comprenant :
la définition d'une partie de section transversale répétitive de la section de noyau, comportant une pluralité de premiers passages de fluide pour l'acheminement d'un premier fluide et une pluralité de deuxièmes passages de fluide pour l'acheminement d'un deuxième fluide et une pluralité de troisièmes passages de fluide pour l'acheminement d'un troisième fluide ;
la répétition de la partie de section transversale le long d'une première direction et d'une seconde direction afin de définir une section transversale complète de la section de noyau de l'échangeur de chaleur ; et
l'extrusion de la section transversale complète le long d'un trajet non linéaire entre une première extrémité de section de noyau et une seconde extrémité de section de noyau.

12. Procédé selon la revendication 11, dans lequel le trajet non linéaire est sinusoïdale.

13. Procédé selon la revendication 11 ou 12, dans lequel la section de noyau est formée par un ou plusieurs procédés de fabrication additive.
